# EUROPEAN PATENT APPLICATION

(11) **EP 4 554 067 A1**
(43) Date of publication of application: **14.05.2025**
(21) Application number: 23923229.1
(22) Date of filing: 27.09.2023
(51) Int. Cl.: H02K 11/215, H02K 11/30, H02K 7/14, B65G 23/08, B65G 13/06

(54) **ROLLER MOTOR**

(30) Priority: 20.09.2023 CN 202322566799 U; 20.09.2023 CN 202311221806
(71) Applicant: Suzhou Zhaowei Industrial Technology Co., Ltd., Suzhou, Jiangsu 215000 (CN); Shenzhen Zhaowei Machinery & Electronics Co., Ltd., Shenzhen, Guangdong 518000 (CN)
(72) Inventor: KE, Shanyao, Shenzhen, Guangdong 518000 (CN); LI, Ping, Shenzhen, Guangdong 518000 (CN); XIE, Weiqun, Shenzhen, Guangdong 518000 (CN)
(74) Representative: Cabinet Netter
(86) International application number: PCT/CN2023/122235
(87) International publication number: WO 2025/060132

(57) **Abstract**

The present application relates to the technical field of conveying devices, and discloses a drum motor, including a drum and a driving member. The driving member is configured to drive the drum to rotate. The drum motor further includes: a first detection assembly including a first magnet and a first Hall element and a second detection assembly including a second magnet and a second Hall element, the first magnet is fixedly connected to the rear end of the output shaft of the driving member, and the drum is fixedly connected to the front end of the output shaft of the driving member, and the first Hall element is configured to detect the magnetic field change of the first magnet to detect the rotation speed of the output shaft; the second magnet is fixedly connected to the drum, and the second Hall element is configured to detect the magnetic field change of the second magnet to detect the rotation speed of the drum. The above-mentioned drum motor can detect the rotation speed of the driving member and the rotation speed of the drum at the same time, and can improve the control precision of the rotation speed of the drum in combination with the control mechanism.

## Description

This application claims the benefit of Chinese patent application No. 202322566799.8, titled "Drum Motor", and Chinese patent application No. 202311221806.9, titled "Drum Motor", filed on September 20, 2023, with the Chinese Patent Office, the contents of which are incorporated herein by reference.

### TECHNICAL FIELD

The present application relates to the technical field of conveying devices, and in particular, to a drum motor.

### BACKGROUND

Drum motors are often used for transport of various heavy objects, and the drum is driven to rotate by motors. Existing drum motors often measure the rotation speed of the motor output shaft through a Hall effect PCB, and the rotation speed of the motor output shaft is taken as the rotation speed of the drum. The Hall effect PCB can transmit the measured data to the control circuit to further control the speed of the motor, thereby achieving controllable speed of the drum. Since the rotation speed of the motor output shaft is not completely synchronized with the rotation speed of the drum, the control accuracy of the drum speed is low.

### SUMMARY

### TECHNICAL PROBLEMS

In view of this, the present application provides a drum motor to solve the problem of low control accuracy of the drum speed of the drum motor in the existing drum motors.

### SOLUTION TO THE PROBLEM

### TECHNICAL PROPOSALS

An embodiment of the present application provides a drum motor, including a drum and a driving member connected to each other, the driving member is configured to drive the drum to rotate, and the drum motor further includes:
a first detection assembly including a first magnet and a first Hall element, wherein the first magnet is fixedly connected to a rear end of an output shaft of the driving member, the drum is fixedly connected to a front end of the output shaft of the driving member, and the first Hall element is configured to detect a change of magnetic field of the first magnet in order to detect a rotation speed of the output shaft; and
a second detection assembly including a second magnet and a second Hall element, wherein the second magnet is fixedly connected to the drum, and the second Hall element is configured to detect a change of magnetic field of the second magnet in order to detect a rotation speed of the drum.

In one embodiment, the drum motor further includes a control mechanism electrically connected to the first Hall element, the second Hall element and the driving member, respectively, and the control mechanism is configured to receive a detection signal emitted by the first Hall element and a detection signal emitted by the second Hall element and control a rotation speed of the driving member.

In one embodiment, an accommodating cavity is provided in the drum, and the driving member, the first detection assembly and the second detection assembly are accommodated in the accommodating cavity.

In one embodiment, the drum motor further includes:
a driving member fixing mechanism fixedly connected to one end of the driving member and at least partially extending outside the accommodating cavity, the driving member fixing mechanism is configured to fix the driving member so that the driving member and the drum are spaced apart; and
a drum supporting mechanism located at one end of the drum away from the driving member fixing mechanism and partially extending outside the accommodating cavity, and the drum supporting mechanism is configured to support the drum.

In one embodiment, the driving member includes a driving shell and a driving body, wherein a receiving space is provided in the driving shell, and the driving body includes the output shaft.

The driving member fixing mechanism includes a supporting member and a connecting member that are fixedly connected to each other, the supporting member extends outside the accommodating cavity, the connecting member is received in the receiving space, and the connecting member and the driving shell are in a circular transition fit, and the first Hall element is arranged on a side of the connecting member facing the output shaft.

In one embodiment, the drum motor further includes a positioning member fixedly connected to the connecting member, and the first Hall element is fixedly connected to the positioning member.

In one embodiment, the second magnet is a ring magnet, the second Hall element and the second magnet are both sleeved on the supporting member, the second Hall element is spaced apart from the drum, and the second magnet is fixedly connected to an inner wall of the drum.

In one embodiment, the drum motor further includes an end cover, the end cover is partially embedded in and fixedly connected to the drum, a mounting channel is provided on the end cover, the supporting member passes through the mounting channel and extends outside the accommodating cavity, and the second magnet is fixedly mounted in the mounting channel.

In one embodiment, the end cover includes a stopper portion disposed in the mounting channel, and a side of the second magnet facing away from the second Hall element abuts against the stopper portion.

In one embodiment, the second magnet is a block magnet, the second magnet is fixed on a mounting ring, the second Hall element and the mounting ring are both sleeved on the supporting member, the second Hall element is spaced apart from the drum, and the mounting ring is fixedly connected to an inner wall of the drum.

### ADVANTAGEOUS EFFECTS

The above-mentioned drum motor includes a drum and a driving member, a first detection assembly and a second detection assembly. The first detection assembly includes a first Hall element and a first magnet fixedly connected to a rear end of an output shaft of the driving member. When the first magnet rotates along with the output shaft of the driving member, the first Hall element can detect the rotation speed of the first magnet and the output shaft according to the change of the magnetic field of the first magnet. The second detection assembly includes a second Hall element and a second magnet fixedly connected to the drum. When the second magnet rotates with the drum, the second Hall element can detect the rotation speed of the second magnet and the drum according to the change of the magnetic field of the second magnet, thereby detecting an accuracy of the moving distance of the material box during the drum conveying process in real time and improving the control accuracy. That is, the above-mentioned drum motor can detect the rotation speed of the driving member and the rotation speed of the drum at the same time, and combined with the control mechanism, it can improve the control accuracy of the drum speed, thereby solving the problem of low control accuracy of the drum speed in existing drum motors.

### DESCRIPTION OF THE DRAWINGS

In order to more clearly illustrate the technical proposals in the embodiments of the present application, the drawings to be used in the description of the embodiments or related art will be briefly introduced below. Apparently, the drawings in the following description are only some embodiments of the present application, for those of ordinary skill in the art, other drawings can be obtained based on these drawings without exerting creative efforts.
FIG. 1 is a perspective view of a drum motor provided in an embodiment of the present application;
FIG. 2 is an exploded view of the drum motor shown in FIG. 1;
FIG. 3 is a perspective view of the driving member in the drum motor shown in FIG. 2 from another angle;
FIG. 4 is an exploded view of the driving member, the driving member fixing mechanism, the first detection assembly and the second detection assembly in the drum motor shown in FIG. 2;
FIG. 5 is an exploded view of the first Hall element, the positioning member and the connecting member in the drum motor shown in FIG. 4 from another angle;
FIG. 6 is a perspective view of the positioning member in the drum motor shown in FIG. 3; and
FIG. 7 is a block diagram of the drum motor shown in FIG. 1.

### Reference signs are as follows:

100 drum motor;
10 drum; 11 accommodating cavity;
20 driving member; 21 output shaft; 22 driving shell; 23 driving body; 24 connecting rod;
31 first magnet; 32 first Hall element; 33 fixing clip;
41 second magnet; 42 second Hall element;
51 control mechanism; 52 transmission mechanism; 53 tensioning mechanism; 54 driving member fixing mechanism; 541 supporting member; 542 connecting member; 55 drum supporting mechanism; 56 positioning member; 561 positioning ring; 562 extension rod; 563 protrusion; 564 connecting hole; 565 protruding column;
60 end cover; 61 stopper portion; 62 first body; and 63 second body.

### DETAILED DESCRIPTION OF THE EMBODIMENTS

In order to make the purpose, technical proposals and advantages of the present application clearer, the present application will be further described in detail below with reference to the drawings and embodiments. It should be understood that the specific embodiments described here are only used to explain the present application and are not used to limit the present application.

It should be understood that terms "lengthwise", "widthwise", "front", "rear", "left", "right", "vertical", "horizontal", "top", "bottom", "inside", "outside", etc. indicating orientation or positional relationship are based on the orientation or positional relationship shown in the drawings, and are merely for the convenience of describing the present application and simplifying the description, rather than indicating or implying that the device or element referred to must have a specific orientation, be constructed and operate in a specific orientation, and therefore cannot be construed as limiting the present application.

In addition, terms "first" and "second" are used for descriptive purposes only and cannot be understood as indicating or implying the relative importance or implicitly indicating the quantity of the indicated features. Therefore, a feature defined as "first" or "second" may explicitly or implicitly include one or more of the features. In the description of this application, the term "a plurality of" means two or more, unless otherwise expressly and specifically defined.

In this application, unless otherwise clearly specified and defined, terms "installed", "connected", "connection", "fixed" and the like should be understood in a broad sense, for example, it may be a fixed connection, a detachable connection, or may be integrally formed; it may be a mechanical connection or an electrical connection; it may be a direct connection or an indirect connection through an intermediate medium, it may be an internal connection of two elements or the interaction relationship between two elements. For those of ordinary skill in the art, the specific meanings of the above terms in this application can be understood according to specific circumstances.

In order to illustrate the technical proposal in this application, the present application is described below with reference to drawings and specific embodiments.

Embodiments of the present application provide a drum motor that can detect rotation speeds of a driving member and a drum in real time to achieve closed-loop control.

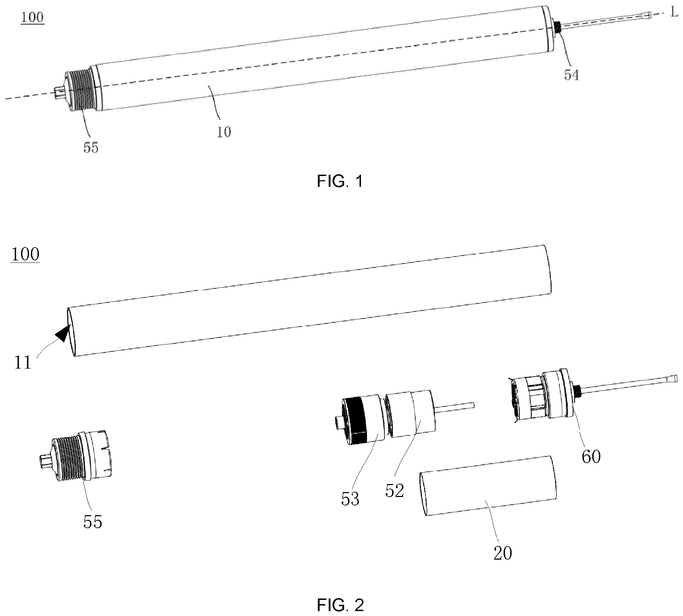

Referring to FIGS. 1 to 4, in one embodiment of the present application, the drum motor 100 includes a drum 10 and a driving member 20 connecting to each other, a first detection assembly and a second detection assembly, and the driving member 20 is configured to drive the drum 10 to rotate. The driving member 20 may be a DC motor, an asynchronous motor or a synchronous motor, and the driving member 20 has an output shaft 21 including a front end and a rear end disposed along an axial direction thereof.

The first detection assembly includes a first magnet 31 and a first Hall element 32. The first magnet 31 is fixedly connected to the rear end of the output shaft 21 of the driving member 20. The first magnet 31 is able to rotate with the rotation of the output shaft 21 of the driving member 20, thus distribution of the magnetic field of the first magnet 31 will change. The drum 10 is fixedly connected to the front end of the output shaft 21 of the driving member 20. That is, the drum 10 and the first magnet 31 are respectively connected to the opposite ends of the output shaft 21, such that, when assembling the drum motor 100, the connection between the drum 10 and the driving member 20, and the connection between the first magnet 31 and the driving member 20 are independent of and do not affect each other, which is convenient for disassembly and assembly.

The second detection assembly includes a second magnet 41 and a second Hall element 42. The second magnet 41 is fixedly connected to the drum 10. The second magnet 41 is able to rotate with the rotation of the drum 10, thus distribution of the magnetic field of the second magnet 41 will change.

The first Hall element 32 and the second Hall element 42 are both solid-state electronic devices utilizing the Hall effect, which are sensitive to changes of the magnetic field and have high precision. The first Hall element 32 is configured to detect the change of the magnetic field of the first magnet 31 in order to detect the rotation speed of the output shaft 21. The second Hall element 42 is configured to detect the change of the magnetic field of the second magnet 41 in order to detect the rotation speed of the drum 10. Since the drum 10 can be used to convey the material box in practical applications, when the second Hall element 42 is configured to detect the rotation speed of the drum 10, it can also detect the precision of the moving distance of the material box during the conveying process of the drum 10 in real time, thereby improving the control accuracy.

The above-mentioned drum motor 100 includes a drum 10 and a driving member 20, a first detection assembly and a second detection assembly. The first detection assembly includes a first Hall element 32 and a first magnet 31 fixedly connected to the rear end of the output shaft 21 of the driving member 20. When the first magnet 31 rotates with the output shaft 21 of the driving member 20, the first Hall element 32 can detect the rotation speed of the first magnet 31 and the output shaft 21 according to the change of the magnetic field of the first magnet 31. The second detection assembly includes a second Hall element 42 and a second magnet 41 fixedly connected to the drum 10. When the second magnet 41 rotates with the drum 10, the second Hall element 42 can detect the rotation speed of the second magnet 41 and the drum 10 according to the change of the magnetic field of the second magnet 41, thereby detecting the precision of the moving distance of the material box during the conveying process of the drum 10 in real time and improving the control accuracy. That is, the above-mentioned drum motor 100 can simultaneously detect the rotation speed of the driving member 20 and the rotation speed of the drum 10. Combined with the control mechanism, it can improve the control accuracy of the rotation speed of the drum 10, and solve the problem of low control accuracy of the drum speed in existing drum motors.

The first Hall element 32 includes a first PCB and a first Hall sensor disposed on the first PCB, and the first magnet 31 is located within the magnetic detection range of the first Hall sensor. Preferably, the sensing face of the first Hall sensor faces the first magnet 31.

Correspondingly, the second Hall element 42 includes a second PCB and a second Hall sensor disposed on the second PCB, and the second magnet 41 is located within the magnetic detection range of the second Hall sensor. Preferably, the sensing face of the second Hall sensor faces the second magnet 41.

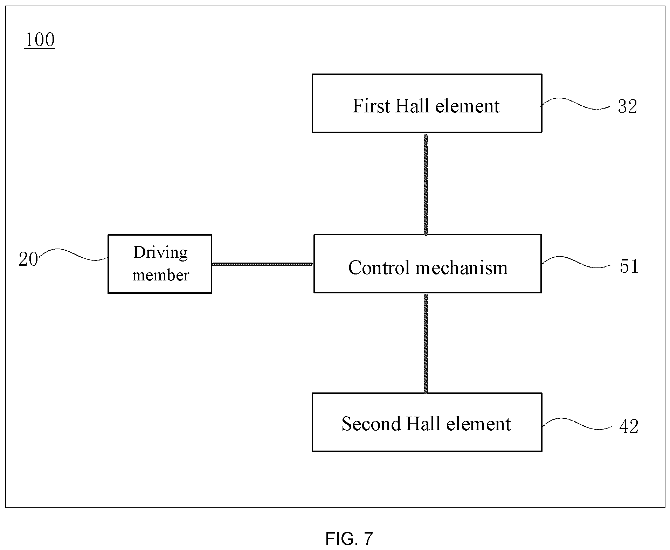

Referring to FIGS. 1 and 7. In one embodiment of the present application, the drum motor 100 also includes a control mechanism 51 that is electrically connected to the first Hall element 32, the second Hall element 42 and the driving member 20, respectively. The control mechanism 51 is configured to receive a detection signal emitted by the first Hall element 32 and a detection signal emitted by the second Hall element 42 and control the rotation speed of the driving member 20, so as to adjust the rotation speed of the driving member 20 according to the rotation speed of the drum 10 to achieve closed-loop control.

It can be understood that when the rotation speed of the drum 10 is greater than the expected speed, the control mechanism 51 can reduce the rotation speed of the driving member 20; when the rotation speed of the drum 10 is less than the expected speed, the control mechanism 51 can increase the rotation speed of the driving member 20.

Referring to FIGS. 1 and 2, in one embodiment of the present application, the drum 10 is provided with an accommodating cavity 11, and the driving member 20, the first detection assembly and the second detection assembly are accommodated in the accommodating cavity 11, such that the space occupied by the drum motor 100 can be reduced.

In this embodiment, the drum motor 100 further includes a transmission mechanism 52 and a tensioning mechanism 53 disposed in the accommodating cavity 11. One end of the transmission mechanism 52 is fixedly connected to the front end of the output shaft 21 of the driving member 20, and the other end thereof is fixedly connected to the tensioning mechanism 53. That is, the tensioning mechanism 53, the transmission mechanism 52, and the driving member 20 are connected in sequence along an axial direction of the drum 10, and the driving member 20 can drive the tensioning mechanism 53 to rotate through the transmission mechanism 52.

A tensioning piece is disposed on an outer peripheral wall of the tensioning mechanism 53 and abuts against an inner wall of the drum 10. A large friction resistance is generated between the tensioning piece and the inner wall of the drum 10, so that the tensioning piece and the drum 10 are stationary relative to each other. When the tensioning mechanism 53 rotates, the tensioning piece can drive the drum 10 to rotate around a rotation axis L. Specifically, the rotation axis L overlaps with the central axis of the drum 10.

The transmission mechanism 52 may be a planetary gearbox including a two-stage reduction assembly, which has high transmission efficiency, small volume and mass, compact structure, little occupation of space, and low noise. It is understood that in other embodiments of the present application, the planetary gearbox may also be provided with more stages of reduction assemblies according to actual requirements, which is not limited herein.

Referring to FIGS. 2 to 4, to facilitate the electrical connection between the first Hall element 32, the second Hall element 42, and the control mechanism 51, in one embodiment of the present application, the first detection assembly and the second detection assembly are located on the same side of the driving member 20 along the axial direction of the drum 10. This reduces the distance between the first Hall PCB and the second Hall PCB, facilitates the fixing and installation of the connecting wires, and reduces the possibility of the connecting wires being entangled.

Specifically, the first detection assembly and the second detection assembly are located on a side of the driving member 20 away from the tensioning mechanism 53.

Referring to FIGS. 1 to 4, in one embodiment of the present application, the drum motor 100 further includes a driving member fixing mechanism 54 and a drum supporting mechanism 55. The driving member fixing mechanism 54 is fixedly connected to one end of the driving member 20 and at least partially extends outside the accommodating cavity 11. The driving member fixing mechanism 54 is configured to fix the driving member 20 so that the driving member 20 and the drum 10 are spaced apart, that is, there is no direct contact between the driving member 20 and the drum 10. The drum supporting mechanism 55 is located at one end of the drum 10 away from the driving member fixing mechanism 54 and partially extends outside the accommodating cavity 11, and the drum supporting mechanism 55 is configured to support the drum 10. In this manner, the position of the driving member 20 accommodated in the accommodating cavity 11 remains unchanged, and the smoothness and stability of the rotation of the drum 10 can be ensured.

In this embodiment, the drum supporting mechanism 55 includes a supporting shaft and a connecting sleeve. The connecting sleeve is partially located in the accommodating cavity 11 and is in interference fitting with the drum 10, so that the connecting sleeve and the drum 10 can be fixedly connected, such that, the connecting sleeve and the drum 10 can rotate synchronously. The supporting shaft is mainly configured to support the drum 10. In practical applications, a drum 10 with output power from a motor is usually connected to multiple unpowered roller sleeves to achieve a reasonable distribution of power. For example, when the drum 10 rotates around the rotation axis L, since the connecting sleeve is fixedly connected to the drum 10, the connecting sleeve will be driven and start to rotate synchronously. By arranging a belt or other connecting pieces on the end of the connecting sleeve away from the drum 10, the unpowered roller sleeves are driven to rotate synchronously, thereby realizing the conveying of the object.

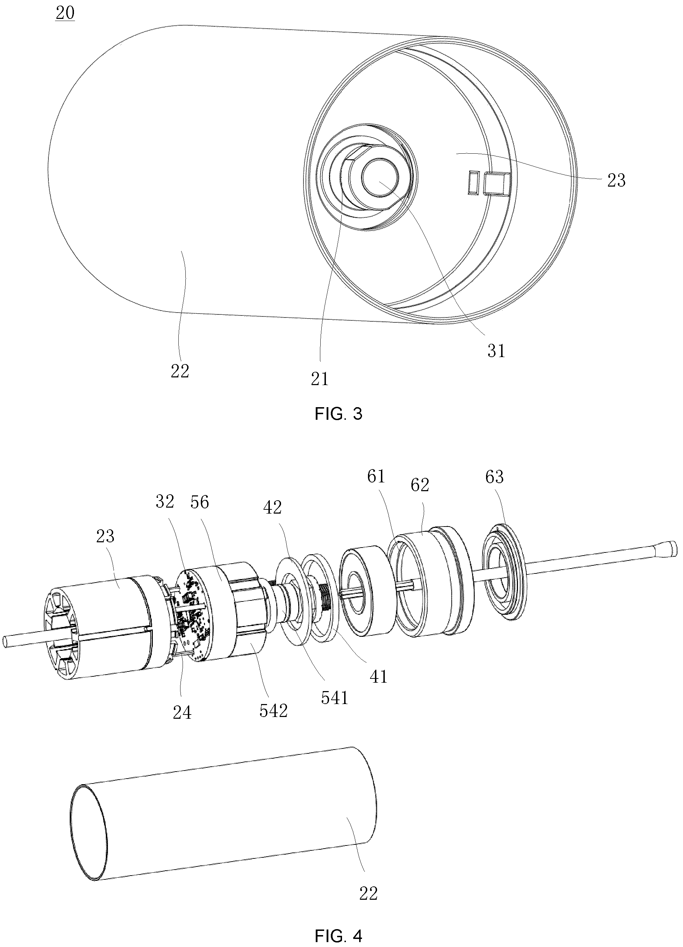

In this embodiment, referring to FIGS. 3 and 4, the driving member 20 includes a driving shell 22 and a driving body 23. The driving shell 22 is provided with a receiving space, and the driving body 23 includes an output shaft 21. The driving member fixing mechanism 54 includes a supporting member 541 and a connecting member 542 connected to each other. The supporting member 541 extends outside the accommodating cavity 11, and the connecting member 542 is received in the receiving space. The connecting member 542 and the driving shell 22 are in a circular transition fit, that is, the connecting member 542 is fixedly connected to the driving shell 22, and the first Hall element 32 is arranged on the side of the connecting member 542 facing the output shaft 21.

Specifically, the supporting member 541 is a hollow column, the connecting member 542 is sleeved on the supporting member 541, and the connecting member 542 and the supporting member 541 are connected by a plane interference fit, so that the connecting member 542 maintains a constant position relative to the supporting member 541, and the connecting member 542 cannot rotate. The connecting member 542 and the driving shell 22 are in a circular transition fit, and the driving shell 22 itself is fixed by the connecting member 542 and is not able to rotate freely. The overall position of the driving member 20 remains substantially unchanged, the stability is high, and the concentricity and reliability can be improved.

The driving principle of the above-mentioned drum motor 100 is as follows: one end of the driving member 20 is fixed and supported by the driving member fixing mechanism 54. When the driving member 20 outputs power, the power is transmitted to the transmission mechanism 52, and the output shaft 21 of the transmission mechanism 52 drives the tensioning mechanism 53 to rotate. Since the tensioning member and the inner wall of the drum 10 can generate sufficient friction, the tensioning mechanism 53 can drive the drum 10 to rotate. The drum supporting mechanism 55 is arranged at the other end of the drum 10, and can be configured to connect the unpowered drum 10 to drive the unpowered drum 10 to rotate.

Referring to FIGS. 1, 4 and 6, in one embodiment of the present application, the drum motor 100 further includes a positioning member 56 fixedly connected to the connecting member 542, and the first Hall element 32 is fixedly connected to the positioning member 56. In this manner, the first Hall element 32 can be fixedly connected to the connecting member 542 through the positioning member 56, and the position of the first Hall element 32 is stable, which can avoid detection deviations caused by random movements.

Specifically, the positioning member 56 includes a positioning ring 561 and an extension rod 562 connected to each other, and a plurality of extension rods 562 are provided, and the plurality of extension rods 562 are evenly distributed along the circumferential direction of the positioning ring 561. Each extension rod 562 is provided with a protrusion 563 at one end away from the positioning ring 561. Each protrusion 563 is bent and connected to the corresponding extension rod 562, and each protrusion 563 extends toward the central axis of the positioning ring 561 away from the corresponding one end of the extension rod 562. The positioning ring 561, the extension rod 562 and the protrusion 563 can be integrally formed. The positioning ring 561 is abutted against one end of the connecting member 542 facing the driving member 20, and the plurality of extension rods 562 are located on the outer peripheral wall of the connecting member 542. Further, a plurality of limiting grooves can be provided on the outer peripheral wall of the connecting member 542, and each extension rod 562 is engaged with a corresponding limiting groove. In this manner, the positioning member 56 can be limited by the limiting grooves to prevent the positioning member 56 from rotating relative to the connecting member 542. One side of the protrusion 563 is abutted against one end of the connecting member 542 facing away from the driving member 20, and the other side of the protrusion 563 is abutted against the second Hall element 42.

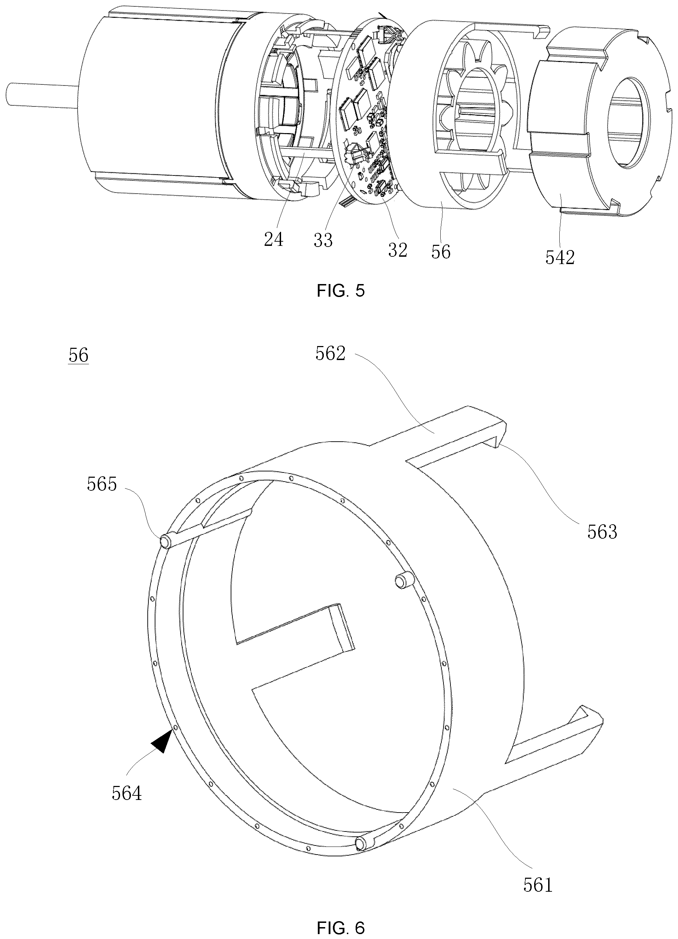

Furthermore, the first Hall element 32 is also fixedly connected to the driving body 23, and this further improves the stability of the position of the first Hall element 32. Referring to FIGS. 4 and 5, a connecting rod 24 is provided on the driving body 23, and one end of the connecting rod 24 passes through the first Hall element 32 and is fixedly connected to the first Hall element 32, so that the position of the first Hall element 32 remains unchanged relative to the driving body 23. Specifically, a fixing clip 33 is provided on a side of the first Hall element 32 away from the driving body 23, and the fixing clip 33 includes two elastic clips arranged oppositely. After the end of the connecting rod 24 away from the driving body 23 passes through the first Hall element 32, it is clamped between the two elastic clips, so that the assembly is convenient. It can be understood that a through hole for the connecting rod 24 to pass through is provided on the first PCB, and the number of the through holes and connecting rods 24 may be multiple, and the plurality of connecting rods 24 are evenly distributed along the circumferential direction of the driving body 23, which can improve the stability of the connection between the first Hall element 32 and the driving body 23.

In addition, the positioning ring 561 has a certain width along the axial direction of the drum 10 so that enough space is provided between the first Hall element 32 and the connecting member 542 to place electronic components, the control mechanism 51, etc. It can be understood that the extension rod 562 should have a slight deformability to facilitate the assembly of the positioning member 56 and the connecting member 542, thereby improving the assembly efficiency of the drum motor 100.

In addition, referring to FIG. 6, a plurality of connecting holes 564 and a plurality of protruding columns 565 are provided on the wall of the positioning ring 561. On the one hand, screws pass through the first Hall PCB of the first Hall element 32 and are threadedly connected to the connecting holes 564. On the other hand, the plurality of protruding columns 565 respectively pass through corresponding through holes on the first Hall PCB, thereby realizing a fixed connection between the first Hall PCB and the positioning member 56, allowing a stable structure and a simple process.

It is understandable that the connection method between the first Hall element 32 and the positioning member 56 is not limited to the above. The connection between the first Hall element 32 and the positioning member 56 may be at least one of a threaded connection, a snap connection, and an adhesive connection, which is not limited herein.

Specifically, the first magnet 31 is a block magnet, with the N pole and S pole located at opposite ends thereof. When the first magnet 31 rotates with the output shaft 21, the magnetic field of the first magnet 31 changes relative to the first Hall element 32 that remains at a fixed position, causing the output voltage of the first Hall sensor to change. It can be understood that the shape of the first magnet 31 can be circular or bar-like, which is not limited herein.

Referring to FIGS. 1 and 4, in one embodiment of the present application, the second magnet 41 is a ring magnet, the second Hall element 42 and the second magnet 41 are both sleeved on the supporting member 541, the second Hall element 42 is spaced apart from the drum 10, and the second magnet 41 is fixedly connected to the inner wall of the drum 10, so that the second magnet 41 and the drum 10 remain rotating synchronously or stationary.

Specifically, the second Hall PCB of the second Hall element 42 has an annular shape and can be fixedly connected with the supporting member 541 by interference fitting or multiple convex and concave structures, that is, the relative position of the second Hall element 42 and the supporting member 541 remains unchanged. It can be understood that the relative position of the first Hall element 32 and the second Hall element 42 remains unchanged, and the first Hall element 32 and the second Hall element 42 can be electrically connected through a connecting wire. Since the second Hall element 42 is spaced apart from the drum 10, the rotation of the drum 10 does not affect the position of the second Hall element 42, namely the second Hall element 42 is always in a stationary state.

In this embodiment, the magnetization direction of the second magnet 41 is along the radial direction, half of the second magnet 41 is the N pole and the other half is the S pole. When the second magnet 41 rotated around the rotation axis L along with the drum 10, the magnetic field of the second magnet 41 changes relative to the second Hall element 42 that is at a fixed position, causing the output voltage of the second Hall sensor to change.

It can be understood that in other embodiments of the present application, the second Hall element 42 and the second magnet 41 may also be arranged outside the drum 10, and the second magnet 41 is fixedly connected to the outer wall of the drum 10, which can also realize real-time detection of the rotation speed of the drum 10, but is not limited thereto.

Referring to FIGS. 2 and 4, in one embodiment of the present application, the drum motor 100 further includes an end cover 60. The end cover 60 is partially embedded in the drum 10 and fixedly connected to the drum 10. The end cover 60 is provided with a mounting channel. The supporting member 541 passes through the mounting channel and extends outside the accommodating cavity 11. The second magnet 41 is fixedly installed in the mounting channel. On the one hand, the end cover 60 can be configured to fix the second magnet 41 to facilitate the installation of the second detection assembly; on the other hand, the end cover 60 can be configured to seal the drum 10 to prevent impurities from entering the drum 10.

In this embodiment, the end cover 60 includes a stopper portion 61 disposed in the mounting channel, and the side of the second magnet 41 facing away from the second Hall element 42 abuts against the stopper portion 61. It can be understood that in other embodiments of the present application, the second magnet 41 may also be embedded in the side wall of the end cover 60, but is not limited thereto.

Specifically, the end cover 60 includes a first body 62 and a second body 63 that are detachably connected, the mounting channel runs through the first body 62, and the second body 63 is provided with a mounting hole. When the first body 62 is connected to the second body 63, the mounting hole corresponds to and is communicated with the mounting channel, and the supporting member 541 passes through the mounting channel and extends to the outside of the accommodating cavity 11 through the mounting hole. The stopper portion 61 is an annular structure protruding from the side wall of the mounting channel, which can fully stop the second magnet 41 and limit the installation position of the second magnet 41. It can be understood that the shape of the stopper portion 61 is not limited thereto. For example, in other embodiments of the present application, the stopper portion 61 may also include a plurality of protruding columns spaced apart and distributed on the side wall of the mounting channel, and the plurality of protruding columns are arranged in an annular shape, but is not limited thereto.

In order to improve the sealing performance of the end cover 60, the joint of the first body 62 and the second body 63 is achieved by a plurality of protruding and recessed structures. In this manner, the possibility of dust and other impurities entering the mounting channel or the accommodating cavity 11 through the connection between the first body 62 and the second body 63 can be reduced when the second body 63 is engaged with the first body 62. Specifically, the plurality of protruding and recessed structures are concentrically arranged. In addition, through holes are provided on both the first body 62 and the second body 63, and threads are provided on the side walls of the through holes. After the second body 63 is engaged with the first body 62, the first body 62 and the second body 63 are fixedly connected by screws matched with the threads of the through holes.

In addition, referring to FIGS. 1 and 4, a flange is provided on the outer peripheral wall of the first body 62. When the end cover 60 is partially embedded in the drum 10, the first body 62 is partially embedded in the drum 10, and the end of the drum 10 abuts against the flange to hold the first body 62 at the end of the drum 10. In other words, the flange is configured to stop the first body 62 to prevent the first body 62 from completely sliding into the drum 10.

It can be understood that the outer diameter of the first body 62 is greater than the outer diameter of the driving shell 22.

It can be understood that the diameter of the mounting channel is greater than the size of the supporting member 541 to avoid contact and friction between the supporting member 541 and the end cover 60.

In addition, the supporting member 541 may be a hollow structure, and the electrical connection wires of the driving member 20, the first detection assembly and the second detection assembly may pass through the supporting member 541 to connect to an external power source, display screen, and the like.

It is understandable that the second magnet 41 may have other structures. For example, in other embodiments of the present application, the second magnet 41 may also be a block magnet, the second magnet 41 is fixedly mounted on a mounting ring, and the second Hall element 42 and the mounting ring are both sleeved on the supporting member 541. The second Hall element 42 is spaced apart from the drum 10, and the mounting ring is fixedly connected to the inner wall of the drum 10.

Specifically, the mounting ring may be engaged in a groove on the inner wall of the drum 10, or the mounting ring may be connected to the inner wall of the drum 10 by screws, but is not limited thereto.

The above-mentioned drum motor 100 detects the rotation speeds of the first magnet 31 and the output shaft 21 through the first Hall element 32, and detects the rotation speeds of the second magnet 41 and the drum 10 through the second Hall element 42, thereby detecting the moving distance precision of the material box during the conveying process of the drum 10 in real time, thereby improving the control accuracy. That is, the above-mentioned drum motor 100 can simultaneously detect the rotation speeds of the driving member 20 and the drum 10, and can improve the control accuracy of rotation speed of the drum 10 by combining with the control mechanism, thereby solving the problem of low control accuracy of the rotation speed of the drum motor in the existing drum motors.

The above are only optional embodiments of the present application and are not used to limit the present application. Although the present application has been described in detail with reference to the aforementioned embodiments, those of ordinary skill in the art should understand that the technical solutions described in the aforementioned embodiments may still be modified, or some of the technical features may be replaced by equivalents. Such modifications or replacements do not deviate the essence of the corresponding technical proposal from the spirit and scope of the technical proposals of the embodiments of the present application, and should all be included in the scope of protection of the present application.

## Claims

1. A drum motor, comprising a drum and a driving member connected to each other, the driving member being configured to drive the drum to rotate, and the drum motor further comprising:
a first detection assembly including a first magnet and a first Hall element, the first magnet being fixedly connected to a rear end of an output shaft of the driving member, the drum being fixedly connected to a front end of the output shaft of the driving member, and the first Hall element being configured to detect a change of magnetic field of the first magnet in order to detect a rotation speed of the output shaft; and
a second detection assembly including a second magnet and a second Hall element, the second magnet being fixedly connected to the drum, and the second Hall element being configured to detect a change of magnetic field of the second magnet in order to detect a rotation speed of the drum.

2. The drum motor as claimed in claim 1, wherein the drum motor further comprises a control mechanism electrically connected to the first Hall element, the second Hall element and the driving member, respectively, and the control mechanism is configured to receive a detection signal emitted by the first Hall element and a detection signal emitted by the second Hall element and control a rotation speed of the driving member.

3. The drum motor as claimed in claim 1 or 2, wherein an accommodating cavity is provided in the drum, and the driving member, the first detection assembly and the second detection assembly are accommodated in the accommodating cavity.

4. The drum motor as claimed in claim 3, further comprising:
a driving member fixing mechanism fixedly connected to one end of the driving member and at least partially extending outside the accommodating cavity, the driving member fixing mechanism being configured to fix the driving member so that the driving member and the drum are spaced apart; and
a drum supporting mechanism located at one end of the drum away from the driving member fixing mechanism and partially extending outside the accommodating cavity, and the drum supporting mechanism being configured to support the drum.

5. The drum motor as claimed in claim 4, wherein the driving member includes a driving shell and a driving body, a receiving space is provided in the driving shell, and the driving body includes the output shaft; and
wherein the driving member fixing mechanism includes a supporting member and a connecting member that are fixedly connected to each other, the supporting member extends outside the accommodating cavity, the connecting member is received in the receiving space, the connecting member and the driving shell are in a circular transition fit, and the first Hall element is arranged on a side of the connecting member facing the output shaft.

6. The drum motor as claimed in claim 5, wherein the drum motor further comprises a positioning member fixedly connected to the connecting member, and the first Hall element is fixedly connected to the positioning member.

7. The drum motor as claimed in claim 5, wherein the second magnet is a ring magnet, the second Hall element and the second magnet are both sleeved on the supporting member, the second Hall element is spaced apart from the drum, and the second magnet is fixedly connected to an inner wall of the drum.

8. The drum motor as claimed in claim 5, wherein the drum motor further comprises an end cover, the end cover is partially embedded in and fixedly connected to the drum, a mounting channel is provided on the end cover, the supporting member passes through the mounting channel and extends outside the accommodating cavity, and the second magnet is fixedly mounted in the mounting channel.

9. The drum motor as claimed in claim 8, wherein the end cover includes a stopper portion disposed in the mounting channel, and a side of the second magnet facing away from the second Hall element abuts against the stopper portion.

10. The drum motor as claimed in claim 5, wherein the second magnet is a block magnet, the second magnet is fixed on a mounting ring, the second Hall element and the mounting ring are both sleeved on the supporting member, the second Hall element is spaced apart from the drum, and the mounting ring is fixedly connected to an inner wall of the drum.
